Europäisches Patentamt

European Patent Office

Office européen des brevets

Publication number: **0 367 272**
**A2**

## EUROPEAN PATENT APPLICATION

Application number: **89120315.0**

Date of filing: **02.11.89**

Int. Cl.⁵ **A23L 3/34 , A23B 9/00**

Priority: **02.11.88 ZA 888206**

Date of publication of application:
**09.05.90 Bulletin 90/19**

Designated Contracting States:
**AT BE CH DE ES FR GB GR IT LI LU NL SE**

Applicant: **NEWTECH MANUFACTURERS
(PROPRIETARY) LIMITED
1039 Pretorius Street
Pretoria Transvaal Province(ZA)**

Inventor: **Du Plessis, Petrus Johannes
15 Salie Street
Bronkhorstspruit Transvaal Province(ZA)**

Representative: **Patentanwälte Deufel- Schön-
Hertel- Lewald- Otto
Isartorplatz 6 PO Box 260247
D-8000 München 26(DE)**

### Treatment of organic material.

A process for treating organic material comprises feeding, along a conduit (30), a hot ammonia-rich gaseous feed stream, which is at a temperature of at least 100° C, into a treatment zone (14) containing a bed (40) of particulate organic material to be treated. The pressure in the treatment zone above the bed is maintained at about atmospheric pressure or less, and a spent gas stream from the treatment zone along a conduit (26).

EP 0 367 272 A2

This invention relates to the treatment of organic material. It relates in particular to a process and apparatus for treating particulate organic material, especially to enrich the material with ammonia which leads to sterilization thereof, detoxification thereof, eg neutralizing aflatoxins. and to an increase in its digestibility and crude protein and/or nitrogen levels.

According to a first aspect of the invention, there is provided a process for treating organic material, which comprises

feeding a hot ammonia-rich gaseous feed stream, which is at a temperature of at least 100°C, into a treatment zone containing a bed of particulate organic material to be treated;

maintaining the pressure in the treatment zone above the bed at about atmospheric pressure or less; and

withdrawing a used or spent gas stream from the treatment zone.

The feeding of the ammonia-rich gaseous feed stream and the withdrawal of the spent gas stream may be effected continuously. The process may include adding make-up ammonia gas to the spent gas stream to form a reconstituted gas stream, heating the reconstituted gas stream up to at least 100°C, and feeding it as the hot ammonia-rich gaseous stream into the treatment zone.

The hot ammonia-rich gaseous feed stream may consist substantially of ammonia.

The amount or volume of ammonia make-up gas added will hence be dependent on the desired feed rate of the hot feed stream to the treatment zone, which in turn will be dependent on factors such as the nature and qualify of the organic material in the zone, the retention time of the material in the zone, the degree of ammonia absorption of the material, etc.

The temperature to which the ammonia-rich reconstituted gaseous stream is heated may be between 100°C and 500°C.

The hot ammonia rich feed stream may enter the treatment zone below or at the bottom of the bed, with the spent gas stream being withdrawn above the bed.

The feed stream may enter the treatment zone at elevated pressure, with a pressure drop occurring across the bed as the gas permeates through the bed so that a substantial portion of the bed as well as the space in the treatment zone above the bed is at said about atmospheric pressure or less. Hence, the process may include pressurizing the reconstituted gaseous stream to provide the driving force of the gas through the treatment zone. The pressurization may be effected by means of a blower, with the suction side of the blower being operatively connected to the zone at or near its upper end, and the discharge side of the blower being connected to the zone at a lower level.

The organic material may be substantially dry, and may be in the form of seeds or grain. The process may include passing the material continuously through the zone. This may be effected by feeding raw particulate organic material continuously into the zone at a relatively high level, allowing it to free fall through the zone countercurrently to the gas flow up the zone, allowing it to accumulate in the bed, and withdrawing treated material from the bottom of the bed.

The retention time of the material in the zone can be selected so that a desired degree of treatment is effected. Hence in some applications, it may be as low as a few seconds, while in other applications it can be as high as a few minutes. Typically, the retention time will be determined by the nature of the material and its ability to absorb ammonia, which is typically between 0,1 and 3,0%, e.g. between 0,5 to 1,5%, of the material mass, with the retention time then being sufficient to obtain maximum ammonia absorption into the material. Hence, the rate of feeding the raw organic material into the zone and withdrawing treated organic material from the zone, can be such that the organic material residence time in the treatment zone is between 5 seconds and 10 minutes.

According to a second aspect of the invention, there is provided apparatus for treating organic material, which comprises

a vessel defining an organic material treatment zone;

feed means for feeding raw particulate organic material into the treatment zone at a relatively high level;

withdrawal means for withdrawing treated particulate organic material from the vessel at a lower level;

a treatment gas inlet leading into the vessel at a low level in proximity to the level of the withdrawal means;

a gas outlet leading from the vessel at a higher level in proximity to the level of the feed means;

pressurizing means operatively connected to the gas outlet and gas inlet by means of conduits so that it can pressurize spent gas withdrawn from the vessel through the outlet, and feed it back into the vessel through the inlet;

a make-up gas conduit leading into the conduit extending from the gas outlet to the pressurizing means; and

heating means for heating gas pressurized by the pressurizing means prior to it being fed back into the vessel.

The feed and withdrawal means may each be an auger, and the pressurizing means may be a blower.

The invention will now be described by way of example, with reference to the accompanying diagrammatic sectional drawing of apparatus for treating organic material in accordance with the process provided by the invention.

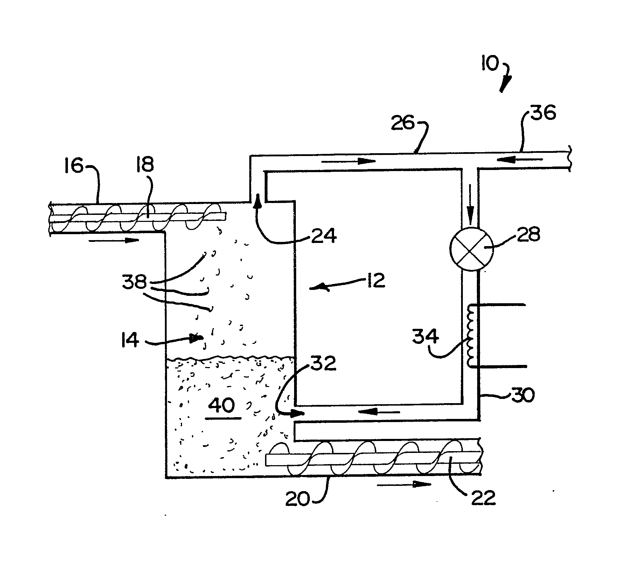

In the drawing, reference numeral 10 generally indicated apparatus for treating organic material in accordance with the process provided by the invention.

The apparatus includes a vertical vessel 12 providing a treatment zone 14. A material inlet conduit 16 extends into the vessel 12 at a high level, with a feed or raw material conveyor or auger 18 located in the conduit 16. A similar conduit 20 leads from the vessel 12 at a low level, and within it is located a treated material withdrawal auger 22.

A gas outlet 24 is provided in the roof of the vessel, and a conduit 26 leads from the gas outlet 24 to the suction side of a blower 28. A conduit 30 leads from the discharge side of the blower 38 to a gas inlet 32 provided in the vessel at a lower level. Electrical heating means 34, in the form of an electrical heating element, is provided in the conduit 30. A make-up ammonia gas conduit 36 leads into the conduit 26.

In use, dry particulate organic material, such as maize seeds or berries, is continuously fed into the upper region of the vessel by means of the auger 18. The seeds 38 free fall downwardly through the upper region of the zone 14, and accumulate in the form of a bed 40 in the bottom of the zone. Treated material is withdrawn continuously from the bed 40 by means of the auger 22.

Spent gas is withdrawn from the top of the vessel via the outlet 24 and the conduit 26, and make-up ammonia gas is added thereto. This gas is pressurized in the blower 28, and thereafter heated by means of the heating element to a temperature of between 100°C and 500°C, e.g. between 200°C and 400°C, before being fed back into the vessel 12 at the bottom of the bed 40. The hot gas, which is substantially pure ammonia, hence permeates through the bed 40 and also flows countercurrently to the seeds falling from the upper regions of the zone 14, thereby treating the grain particles.

As described hereinbefore, the residence time of the grain in the reactor 12 will be selected bearing in mind factors such as the type and nature of the grain particles and the quantity of ammonia they can absorb, which is typically between 0,5 and 1,5% by mass. The process is a continuous process with grain continually being fed into the upper region of the treatment zone, and continually being withdrawn from the bottom region of the zone, and with the grain retention time in the vessel typically being as low as a few seconds, eg 5 to 10 seconds, or as high as a few minutes, eg 5 to 10 minutes.

The driving force of the gas through the vessel is hence a pressure difference, with the hot feed gas being at a positive pressure, but with a pressure drop taking place across the bed 40 and across the zone 14, so that the pressure at the top of the zone, and in a substantial portion of the bed 40, is at about atmospheric pressure or slightly lower.

By treating the particulate organic material in this fashion, it is enriched with ammonia which leads to sterilization thereof, detoxification thereof, eg neutralizing aflatoxins, and to an increase in its digestibility and crude protein and/or nitrogen levels.

The relatively low pressure in the reactor, apart from resulting in effective treatment of the material with the ammonia, even in the absence of water addition, also inhibits escape of ammonia from the apparatus, avoiding the necessity of complicated and expensive seal means, eg in the augers 18, 22. Still further, a wide variety of particulate organic materials, apart from grain, can be treated in the apparatus 10, such as straw, roughage, and crop residues.

## Claims

1. A process for treating organic material, characterized in that it comprises
feeding a hot ammonia-rich gaseous feed stream, which is at a temperature of at least 100°C, into a treatment zone containing a bed of particulate organic material to be treated;
maintaining the pressure in the treatment zone above the bed at about atmospheric pressure or less; and
withdrawing a spent gas stream from the treatment zone.

2. A process according to Claim 1, characterized in that it comprises effecting the feeding of the ammonia-rich gaseous feed stream and the withdrawal of the spent gas stream continuously, adding make-up ammonia gas to the spent gas stream to form a reconstituted gas stream, heating the reconstituted gas stream to at least 100°C, and feeding it as the hot ammonia-rich gaseous stream into the treatment zone.

3. A process according to Claim 2, characterized in that the hot ammonia rich feed stream enters the treatment zone below or at the bottom of the bed, and the spent gas stream is withdrawn from above the bed, with the feed stream entering the treatment zone at elevated pressure, a pressure drop thus occurring across the bed as the gas permeates through the bed so that a substantial portion of the bed as well as the space in the treatment zone above the bed is at said about atmospheric pressure or less.

4. A process according to Claim 2 or Claim 3 characterized in that it comprises feeding particulate organic material continuously through the treatment zone by introducing raw particulate organic material continuously into the top of the treatment zone, allowing it to free fall from the top of the zone onto the top of the bed, and withdrawing treated material continuously from the bottom of the bed.

5. A process according to Claim 4 characterized in that the rate of feeding the raw organic material into the zone and withdrawing treated organic material from the zone, is such that the organic material residence time in the treatment zone is between 5 seconds and 10 minutes.

6. Apparatus for treating organic material, characterized in that it comprises
a vessel defining an organic material treatment zone;
feed means for feeding raw particulate organic material into the treatment zone at a relatively high level;
withdrawal means for withdrawing treated particulate organic material from the vessel at a lower level;
a treatment gas inlet leading into the vessel at a low level in proximity to the level of the withdrawal means;
a gas outlet leading from the vessel at a higher level in proximity to the level of the feed means;
pressurizing means operatively connected to the gas outlet and gas inlet by means of conduits so that it can pressurize spent gas withdrawn from the vessel through the outlet, and feed it back into the vessel through the inlet;
a make-up gas conduit leading into the conduit extending from the gas outlet to the pressurizing means; and
heating means for heating gas pressurized by the pressurizing means prior to it being fed back into the vessel.

7. Apparatus according to Claim 6, characterized in that the feed and withdrawal means are each an auger, and the pressurizing means is a blower.